# EUROPÄISCHE PATENTSCHRIFT

(11) **EP 2 580 018 B1**
(45) Veröffentlichungstag und Bekanntmachung des Hinweises auf die Patenterteilung: **19.02.2020**
(21) Anmeldenummer: 11722714.0
(22) Anmeldetag: 11.05.2011
(51) Int. Cl.: B23K 9/12, B23K 9/29, B23K 9/32, F16L 37/24

(54) **SYSTEM ZUR BEFESTIGUNG EINER DRAHTSEELE IN EINER KUPPLUNG UND DRAHTEINLAUFDÜSE FÜR EIN SOLCHES BEFESTIGUNGSSYSTEM**
SYSTEM FOR SECURING A WIRE CORE IN A COUPLING AND WIRE INLET NOZZLE FOR SUCH A SECURING SYSTEM
SYSTÈME DE FIXATION D'UNE GAINE DE FIL DE SOUDAGE DANS UN RACCORD ET BUSE D'INTRODUCTION DU FIL POUR UN TEL SYSTÈME DE FIXATION

(30) Priorität: 11.06.2010 AT 9582010
(43) Veröffentlichungstag der Anmeldung: 17.04.2013
(73) Patentinhaber: Fronius International GmbH, 4643 Pettenbach (AT)
(72) Erfinder: FÜRLINGER, Johannes, A-4621 Sipbachzell (AT); MITTERHUMER, Walter, A-4643 Pettenbach (AT)
(74) Vertreter: Sonn & Partner Patentanwälte
(86) Internationale Anmeldenummer: PCT/AT2011/000224
(87) Internationale Veröffentlichungsnummer: WO 2011/153560

(56) Entgegenhaltungen:
- WO-A1-2005/021199
- DE-A1-102008 019 327
- DE-U- 7 146 805
- KR-A- 20020 042 604
- US-A1- 2008 217 314

## Beschreibung

Die Erfindung betrifft eine Drahteinlaufdüse zur Befestigung in einer Kupplung eines Schlauchpakets sowie ein System zur Befestigung einer Drahtseele für einen Schweißdraht in einer Kupplung eines Schlauchpakets mit einer solchen Drahteinlaufdüse.

Eine Drahteinlaufdüse der gegenständlichen Art ist aus der DE 71 46 805 U bekannt geworden, wobei die Befestigung über eine Überwurfmutter erfolgt.

Andere Konstruktionen sind beispielsweise aus der WO 2005/097391 A2, der WO 2005/021199 A1 oder der DE 10 2008 019 327 A1 bekannt.

Die Aufgabe der Erfindung besteht in der Schaffung einer oben genannten Drahteinlaufdüse sowie eines oben genannten Befestigungssystems, durch welche eine einfach und werkzeuglos durchführbare Befestigung der Drahteinlaufdüse und Drahtseele in einem Arbeitsschritt kombiniert werden kann.

Gelöst wird die erfindungsgemäße Aufgabe durch eine oben genannte Drahteinlaufdüse mit einem Drahteinlaufelement und einem zylinderförmig ausgebildeten und zumindest einen Schlitz zur Bildung zumindest zweier beweglicher Backen aufweisenden Befestigungsmittel, wobei das Befestigungsmittel eine Öffnung zur lösbaren Aufnahme einer Drahtseele aufweist, und zur gleichzeitigen Fixierung der Drahtseele und in der Kupplung durch eine manuelle Drehbewegung verformbar ausgebildet ist, wobei das Befestigungsmittel an dem dem Drahteinlaufelement gegenüberliegenden Ende mit einem ovalen Steg versehen ist, welcher ovale Steg gegenüber dem zylinderförmigen Bereich erhöht ausgebildet ist. Diese Konstruktion ermöglicht eine einfache Klemmung der Drahtseele und ein rasches, werkzeugloses gleichzeitiges Befestigen von Drahtseele und Drahteinlaufdüse. An der Drahtseele müssen keine zusätzlichen Elemente befestigt werden, sodass in einfacher Weise sog. "Endlos-Drahtseelen" verwendet werden können, die auf die gewünschte Länge gebracht werden. Die Drahtseele kann von einer beliebigen Seite montiert werden, also von einer beliebigen Seite durch das Schlauchpaket geschoben werden, da keine zusätzlichen Elemente an der Drahtseele befestigt sind. Ein weiterer Vorteil besteht darin, dass die Drahtseele bei der Fixierung nicht verdreht wird. Das gegenständliche Befestigungssystem ist auch unabhängig vom Material (Stahl, Kunststoff, usw.) der Drahtseele. Die Klemmung der Drahtseele erfolgt durch Verdrehen der Drahteinlaufdüse mit geringem Kraftaufwand, da die Krafteinbringung distanziert von der Klemmung erfolgt.

In der Drahteinlaufdüse ist zwischen Drahteinlaufelement und Befestigungsmittel vorzugsweise ein Bereich gerippt oder geriffelt ausgeführt zur Erleichterung einer werzeuglosen, manuellen Drehbewegung zur Fixierung der Drahteinlaufdüse.

Um eine visuelle Kontrolle der Fixierung und Klemmung der Drahtseele vornehmen zu können, ist im Fixierelement der Drahteinlaufdüse und der Kupplung jeweils zumindest eine Kerbe zur Markierung der Fixierung der Drahtseele angeordnet. Bei einer ordnungsgemäßen Fixierung stehen die beiden Kerben vorzugsweise an der selben Position bzw. fluchten miteinander.

Die Aufgabe der Erfindung wird auch durch ein oben genanntes Befestigungssystem mit einer oben genannten Drahteinlaufdüse. Zu den dadurch erzielbaren Vorteilen und fakultativen Merkmalen wird auf die obige Beschreibung der Drahteinlaufdüse verwiesen.

Die Kupplung weist entlang eines ersten Teilabschnitts vorzugsweise eine ovale Ausnehmung und am Ende einen nahezu rund ausgebildeten zweiten Teilabschnitt auf. Dadurch wird die Positionierung des Steges der Drahteinlaufdüse in der Kupplung und eine mögliche Verdrehung der Drahteinlaufdüse gegenüber der Kupplung vordefiniert. Ebenso wird durch diese Bauweise ein selbstständiges Lösen der Drahteinlaufdüse von der Kupplung verhindert.

Die vorliegende Erfindung wird anhand der beigefügten, schematischen Zeichnungen näher erläutert. Darin zeigen:
Fig. 1 eine schematische Darstellung eines Schweißgerätes;
Fig. 2 ein schematisches Schnittbild der erfindungsgemäßen Drahteinlaufdüse;
Fig. 3 eine schematische Draufsicht auf die Drahteinlaufdüse;
Fig. 4 eine schematische Draufsicht auf einen Stromdorn einer Kupplung;
Fig. 5 ein schematisches Schnittbild des Stromdorns gemäß Fig. 4;
Fig. 6 ein schematisches Schnittbild des Stromdorns gemäß Fig. 5 entlang der Schnittlinie VI-VI;
Fig. 7 eine schematische Explosionsdarstellung des erfindungsgemäßen Befestigungssystems;
Fig. 8 ein schematisches Schnittbild des Befestigungssystems in zusammengestecktem Zustand; und
Fig. 9 ein schematisches Schnittbild des Befestigungssystems in zusammengestecktem, verdrehtem und fixiertem Zustand.

Einführend wird festgehalten, dass gleiche Teile des Ausführungsbeispiels mit gleichen Bezugszeichen versehen werden. Die in der gesamten Beschreibung enthaltene Offenbarung kann sinngemäß auf gleiche Teile mit gleichen Bezugszeichen übertragen werden. Weiters können auch Einzelmerkmale aus den dargestellten Ausführungsbeispielen eigenständige, erfindungsgemäße Lösungen darstellen.

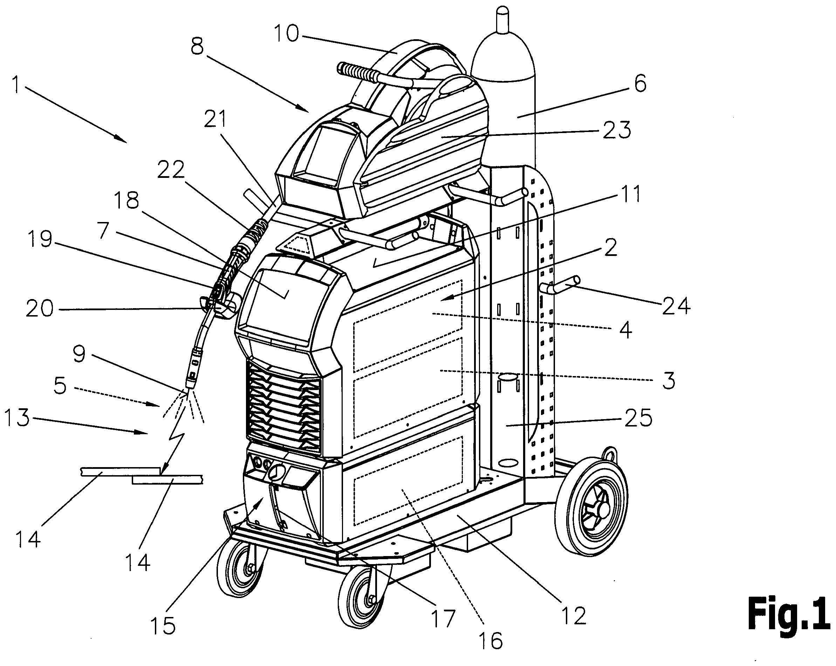

In Fig. 1 ist ein Schweißgerät 1 bzw. eine Schweißanlage für verschiedenste Prozesse bzw. Verfahren, wie z.B. MIG/MAG-, WIG/TIG-, Elektroden-, Doppeldraht/Tandem-Schweißverfahren, Plasma- oder Lötverfahren usw., gezeigt.

Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw.. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf einem Fahrwagen 12 positioniert ist. Das Drahtvorschubgerät 8 kann auch direkt auf das Schweißgerät 2 aufgesetzt werden, wobei das Gehäuse 11 der Stromquelle 2 an der Oberseite zur Aufnahme des Drahtvorschubgerätes 8 ausgebildet ist, und der Fahrwagen 12 entfallen kann.

Der Schweißdraht 9 bzw. der Zusatzwerkstoff kann vom Drahtvorschubgerät 8 auch außerhalb des Schweißbrenners 7 an die Prozessstelle zugeführt werden, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem aus einem oder mehreren Teilen gebildeten Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 wird über eine weitere Schweißleitung (nicht dargestellt) für das weitere Potential, insbesondere ein Masse-Kabel, mit der Stromquelle 2 verbunden, wodurch über den Lichtbogen 13 bzw. einem gebildeten Plasmastrahl ein Stromkreis für einen Prozess aufgebaut werden kann. Bei Verwendung eines Brenners mit internem Lichtbogen 13 ((nicht dargestellt) wie dies bei einem Plasma-Brenner der Fall sein kann) werden die beiden Schweißleitungen zum Brenner geführt, sodass im Brenner ein entsprechender Stromkreis aufgebaut werden kann (nicht dargestellt).

Zum Kühlen des Schweißbrenners 7 wird dieser über ein Kühlgerät 15 unter Zwischenschaltung ev. Komponenten, wie beispielsweise einen Strömungswächter, mit einem Flüssigkeitsbehälter, insbesondere einem Wasserbehälter 16 mit einer Füllstandsanzeige 17, verbunden. Bei Inbetriebnahme des Schweißbrenners 7 wird das Kühlgerät 15, insbesondere eine für die im Wasserbehälter 16 angeordnete Flüssigkeit verwendete Flüssigkeitspumpe, gestartet, wodurch eine Kühlung des Schweißbrenners 7 bewirkt wird. Wie bei dem dargestellten Ausführungsbeispiel gezeigt, wird das Kühlgerät 15 auf den Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über welche die unterschiedlichsten Schweißparameter, Betriebsarten oder Schweißprogramme des Schweißgerätes 1 eingestellt bzw. aufgerufen und angezeigt werden können. Die über die Ein- und/oder Ausgabevorrichtung 18 eingestellten Schweißparameter, Betriebsarten oder Schweißprogramme werden an die Steuervorrichtung 4 weitergeleitet und von dieser anschließend die einzelnen Komponenten des Schweißgerätes 1 angesteuert bzw. entsprechende Sollwerte für die Regelung oder Steuerung vorgegeben. Bei Verwendung eines entsprechenden Schweißbrenners 7 können auch Einstellvorgänge über den Schweißbrenner 7 vorgenommen werden, wozu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter (nicht dargestellt) auf, durch dessen Betätigung der Lichtbogen 13 gezündet werden kann. Um gegen die vom Lichtbogen 13 ausgehende Hitzestrahlung geschützt zu werden, kann der Schweißbrenner 7 mit einem Hitzeschutzschild 20 ausgestattet werden.

Beim dargestellten Ausführungsbeispiel ist der Schweißbrenner 7 über ein Schlauchpaket 21 mit dem Schweißgerät 1 verbunden, wobei das Schlauchpaket 21 über einem Knickschutz 22 am Schweißbrenner 7 befestigt sein kann. Im Schlauchpaket 21 sind die einzelnen Leitungen, wie beispielsweise die Versorgungsleitung, Leitungen für den Schweißdraht 9, das Gas 5, den Kühlkreislauf, die Datenübertragung, usw., vom Schweißgerät 1 zum Schweißbrenner 7 angeordnet, wogegen das Masse-Kabel bevorzugt gesondert an der Stromquelle 2 angeschlossen wird. Das Schlauchpaket 21 wird vorzugsweise über eine nicht dargestellte Kupplungsvorrichtung an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpakets 21 gewährleistet ist, kann das Schlauchpaket 21 über eine Zugentlastungsvorrichtung mit dem Gehäuse 11 der Stromquelle 2 oder dem Drahtvorschubgerät 8 verbunden sein (nicht dargestellt).

Grundsätzlich müssen für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden. Der Schweißbrenner 7 kann auch als luftgekühlter Schweißbrenner 7 ausgeführt werden und das Kühlgerät 15 entfallen. Das Schweißgerät 1 wird zumindest durch die Stromquelle 2, das Drahtvorschubgerät 8 und allenfalls das Kühlgerät 15 gebildet, wobei diese Komponenten auch in einem gemeinsamen Gehäuse 11 angeordnet sein können. Es können noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6, usw. angeordnet werden.

Des Weiteren ist es bekannt, dass der Schweißdraht 9 in einer Drahtseele 26 bzw. Schweißdrahtseele 26 im Schlauchpaket 21 zum Schweißbrenner 7 geführt wird. Der Übergang des Schweißdrahts 9 von der Vorschubeinheit des Drahtvorschubgeräts 8 in die Drahtseele 26 erfolgt über eine sogenannte Drahteinlaufdüse 27, welche im Wesentlichen im Zentrum eine durchgehende Öffnung 28 für den Schweißdraht 9 aufweist. Die Drahteinlaufdüse 27 wird bevorzugt in eine Kupplung 29 des Schlauchpakets 21 eingeschraubt, wodurch gleichzeitig die Drahtseele 26 fixiert wird. Für diese Fixierung ist es allerdings erforderlich, vorher an der Drahtseele 26 ein Befestigungsstück, beispielsweise durch Pressen zu fixieren. Dieses Befestigungsstück vergrößert dementsprechend den Durchmesser der Drahtseele 26, sodass diese nicht mehr verrutschen kann und fixiert ist.

Erfindungsgemäß ist nun eine Befestigung ohne Befestigungsstück vorgesehen, sodass eine werkzeuglose Befestigung der Drahtseele 26 möglich ist, wobei die Drahtseele 26 in die Drahteinlaufdüse 27 gesteckt wird und gleichzeitig, mit der Befestigung der Drahteinlaufdüse 27 auch die Drahtseele 26 in der Drahteinlaufdüse 27 geklemmt und fixiert wird.

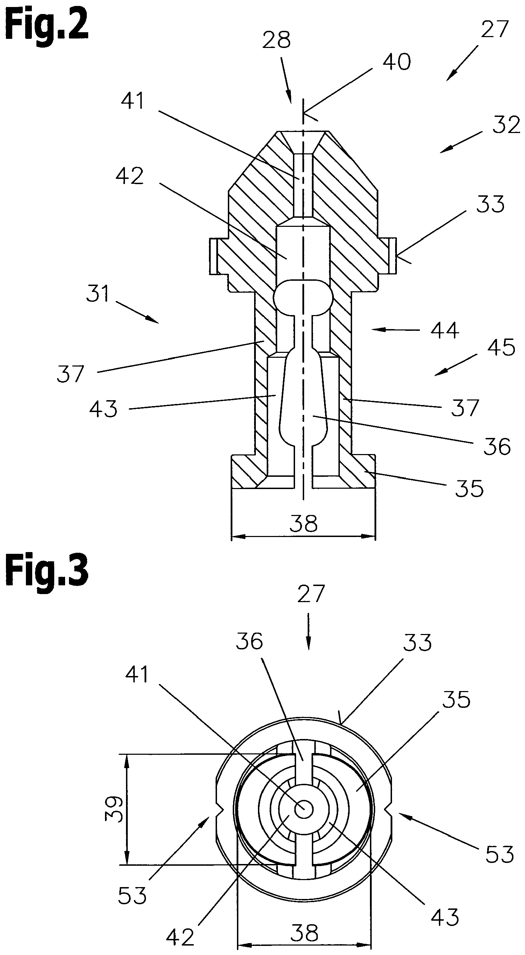

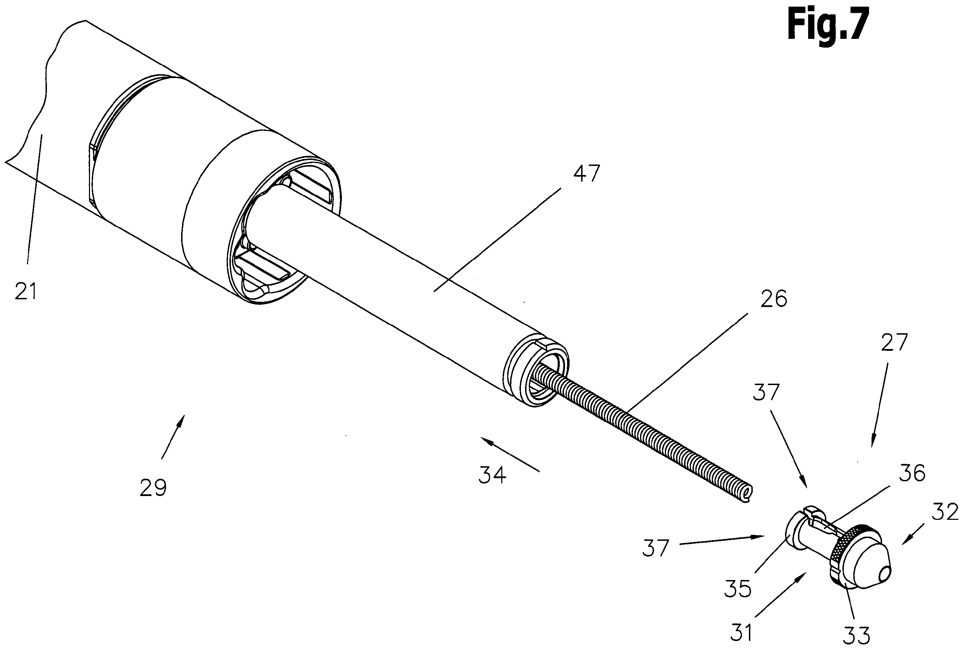

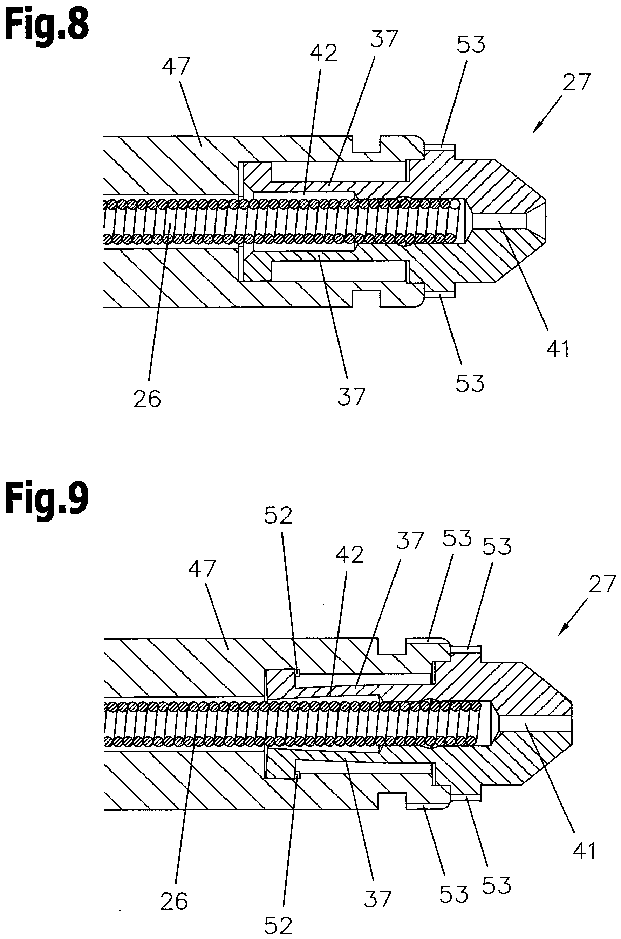

Im Detail wird dies im Folgenden anhand der Figuren 2 bis 9 beschrieben.

Für die gleichzeitige Befestigung von Drahtseele 26 und Drahteinlaufdüse 27 ist die Drahteinlaufdüse 27 als ein Teil des Befestigungssystems speziell ausgebildet. Insbesondere ist ein Abschnitt der Drahteinlaufdüse 27 als Befestigungsmittel 31 ausgebildet, wobei der Abschnitt des Drahteinlaufelements 32 und der Abschnitt des Anschlags 33 darauf angepasst sind. Sowohl das Drahteinlaufelement 32 als auch der Anschlag 33 sind grundsätzlich bekannt. In Förderrichtung 34 bzw. Hauptförderrichtung des Schweißdrahts 9 gesehen, stellt das Drahteinlaufelement 32 den ersten Abschnitt, der Anschlag 33 den zweiten Abschnitt und das Befestigungsmittel 31 den dritten Abschnitt dar.

Das Befestigungsmittel 31 ist zylinderförmig ausgebildet, wobei an jenem Ende, welches dem Drahteinlaufelement 32 gegenüberliegt, ein ovaler (bzw. elliptischer) Steg 35 angeordnet ist. Des Weiteren wird das Befestigungsmittel 31 durch, zumindest einen Schlitz 36 in zumindest zwei Teile unterteil. Im Fall eines Schlitzes 36 entstehen zwei Backen 37, welche dem Befestigungselement 31 eine entsprechende Verformbarkeit verleihen. Der Schlitz 36 erstreckt sich auch über den ovalen Steg 35, welcher ebenso in zwei Hälften unterteilt wird. Das Befestigungsmittel 31 wird quasi in der Mitte durchschnitten, sodass die zwei beweglichen Backen 37 entstehen.

Die Länge der Hauptachse 38 des ovalen Stegs 35 ist größer als der Durchmesser des zylinderförmig ausgebildeten Teils des Befestigungsmittels 31. Bevorzugt ist aber auch die Länge der Nebenachse 39 größer als der Durchmesser des zylinderförmigen Teils. Demzufolge steht also der ovale Steg 35 über den zylinderförmigen Teil des Befestigungsmittels 31 hervor. Die Länge der Hauptachse 38 des ovalen Stegs 35 ist kleiner als der Durchmesser des Anschlags 33 der Drahteinlaufdüse 27. Dadurch kann das Befestigungsmittel 31 bis zum Anschlag 33 von der Kupplung 29 des Schlauchpakets 21 aufgenommen werden. Das Befestigungsmittel 31 ist im zusammengebauten Zustand nicht sichtbar, da es somit im Inneren der Kupplung 29 angeordnet ist.

Um die Mittelachse 40 der Drahteinlaufdüse 27 sind drei konzentrische Bohrungen angeordnet, wobei die erste Bohrung 41 im Drahteinlaufelement 32 angeordnet ist und an den Durchmesser des Schweißdrahts 9 angepasst ist, die zweite Bohrung 42 an den Durchmesser der Drahtseele 26 angepasst ist und die dritte Bohrung 43 größer als der Durchmesser der Drahtseele 26 ausgebildet ist. Die dritte Bohrung 43 ist im Bereich des Befestigungsmittels 31 und die zweite Bohrung 42 im Bereich des Anschlags 33 angeordnet. Durch die zweite Bohrung 42 wird ein Pressbereich 44 für die Drahtseele 26 realisiert. Der Bereich des Befestigungsmittels 31 um die dritte Bohrung 43 ist als Federbereich 45 ausgebildet. Der Pressbereich 44 ist im Wesentlichen im Übergangsbereich zwischen der dritten Bohrung 43 und der zweiten Bohrung 42 ausgebildet, also am Ende des Federbereichs 45. Somit sind im Befestigungselement 31 sowohl der Pressbereich 44 als auch der Federbereich 45 angeordnet. Der Schlitz 36 ist vor und nach dem Pressbereich 44 vergrößert ausgebildet, sodass ein definierter Pressbereich 44 gebildet wird. In diesem Pressbereich 44 wird also die Drahtseele 26 geklemmt und fixiert, indem der Pressbereich 44 verengt wird. Die Kraft zum Klemmen der Drahtseele 26 im Pressbereich 44 wird gemäß dem Hebelgesetz über die Länge des Federbereichs 45 bestimmt. Da der ovale Steg 35 am Anfang des Federbereichs 45 angeordnet ist und gegenüber dem zylinderförmigen Bereich hervorstehend ausgebildet ist, werden die Backen 37 über diesen ovalen Steg 35 entsprechend zusammengedrückt. Die Klemmung der Drahtseele 26 im Pressbereich 44 kann somit mit geringem Kraftaufwand am Anfang des Federbereichs 45 durchgeführt werden. Zusätzlich kann die Kraft auch durch die Ausführung der Schlitze 36 - wie die Vergrößerung vor und nach dem Pressbereich 44 - beeinflusst werden, da dadurch die zu bewegende Materialmenge beeinflussbar ist.

Zur Befestigung der Drahtseele 26 wird diese durch die dritte Bohrung 43 der Drahteinlaufdüse 27 geführt und in die zweite Bohrung 42 eingesteckt. Anschließend kann das Befestigungsmittel 31 mit der darin befindlichen Drahtseele 26 in eine Ausnehmung 46 der Kupplung 29 des Schlauchpaktes 21 als ein weiterer Teil des Befestigungssystems eingeführt werden. Somit befindet sich die Drahtseele 26 im Pressbereich 44 der Drahteinlaufdüse 27, wobei dieser noch nicht verengt ist und entsprechend die Drahtseele 26 noch nicht geklemmt ist. Beispielsweise kann die Ausnehmung 46 stirnseitig und zentrisch an einem Stromdorn 47 der Kupplung 29 angeordnet sein, sodass die Drahtseele 26 im Zentrum des Stromdorns 47 positioniert werden kann. Die Ausnehmung 46 ist in einem ersten Teilabschnitt 48 korrespondierend zum ovalen Steg 35 entsprechend oval ausgeführt. Dementsprechend hat auch der erste Teilabschnitt 48 der Ausnehmung 46 eine Hauptachse und eine Nebenachse, welche im Wesentlichen der Hauptachse 38 und der Nebenachse 39 des ovalen Stegs 35 entsprechen. Dadurch kann die Position für das Einführen des Befestigungsmittels 31 bis zum Anschlag 33 definiert werden. Der erste Teilabschnitt 48 der Ausnehmung 46 weist eine Länge bzw. Tiefe auf, welche im Wesentlichen dem zylindrischen Bereich des Befestigungsmittels 31 bzw. der Länge zwischen dem Anschlag 33 und dem ovalen Steg 35 entspricht. Anschließend an den ovalen Teilabschnitt 48 ist die Ausnehmung 46 im zweiten Teilabschnitt 49 nahezu rund ausgeführt, entsprechend der Höhe des ovalen Stegs 35. Dementsprechend kann die Drahteinlaufdüse 27 verdreht werden, sobald der Anschlag 33 am Stromdorn 47 anliegt. Vorteilhafterweise ist die Stirnseite des Anschlags 33 gerippt oder geriffelt ausgeführt, sodass der Benutzer oder Schweißer die Drahteinlaufdüse 27 werkzeuglos mit den Fingern verdrehen und dadurch die Drahtseele 26 und die Drahteinlaufdüse 27 fixieren kann. Der Anschlag 33 ist also als Fixierelement der Drahteinlaufdüse 27 ausgebildet.

Eine Verdrehung der Drahteinlaufdüse 27 ist also nur möglich, wenn sich der ovale Steg 35 unterhalb des ovalen Teilabschnitts 48 der Ausnehmung 46 befindet. Damit bei der Verdrehung die Backen 37 zusammengedrückt werden, ist der zweite Teilabschnitt 49 entsprechend oval bzw. elliptisch ausgebildet, wobei lediglich ein minimaler Unterschied zwischen der Länge der Hauptachse 50 und der Länge der Nebenachse 51 besteht. Der zweite Teilabschnitt 49 ist also nahezu rund ausgebildet. Die Länge der Hauptachse des ersten Teilabschnitts 48 ist gleich der Länge der Hauptachse 50. Wenn die Drahteinlaufdüse 27 verdreht wird, wird die Hauptachse 38 des ovalen Stegs 35 auf die Nebenachse 51 im zweiten Teilabschnitt 49 der Ausnehmung 46 gedreht und die Backen 37 um die Längendifferenz zwischen der Hauptachse 50 und der Nebenachse 51 zusammengedrückt, wodurch der Pressbereich 44 entsprechend verengt und die Drahtseele 26 geklemmt wird.

Die Fixierung der Drahteinlaufdüse 27 erfolgt dadurch, dass der gegenüber dem zylindrischen Bereich des Befestigungsmittels 31 erhöht ausgebildete ovale Steg 35 im Bereich der Hauptachse 50 zumindest teilweise hinter den ovalen Teilabschnitt 48 der Ausnehmung 46, also fluchtend zur Nebenachse 51 des ovalen Teilabschnitts 48 der Ausnehmung 46, verdreht wird. Dies resultiert daraus, dass der zweite Teilabschnitt 49 der Ausnehmung 46 nahezu rund ausgebildet ist. Dementsprechend ist die Länge fluchtend zur Nebenachse 51 des ovalen Teilabschnitts 48 der Ausnehmung 46 größer als die Länge der Nebenachse 51. Somit kann der ovale Steg 35 hinter den ovalen Teilabschnitt 48 der Ausnehmung 46 verdreht werden und die Drahteinlaufdüse 27 nicht aus dem Stromdorn 47 gezogen werden.

Fluchtend zur Nebenachse 51 des ovalen Bereichs der Ausnehmung 46 ist der nahezu runde zweite Teilabschnitt 49 der Ausnehmung 46 mit Ausbuchtungen 52 versehen, sodass die Klemmung der Drahtseele 26 geringfügig gelockert wird, und die Backen 37 wieder geringfügig auseinander gehen. Dadurch wird für den Benutzer eine Einrastung spürbar ist und zusätzlich eine Sicherung der Fixierung der Drahteinlaufdüse 27 erzielt, da vor einer Verdrehung der Drahteinlaufdüse 27 die Backen 37 geringfügig zusammengedrückt werden müssen, also ein gewisser Kraftaufwand erforderlich ist. Somit wird eine unbeabsichtigte Verdrehung im Wesentlichen ausgeschlossen.

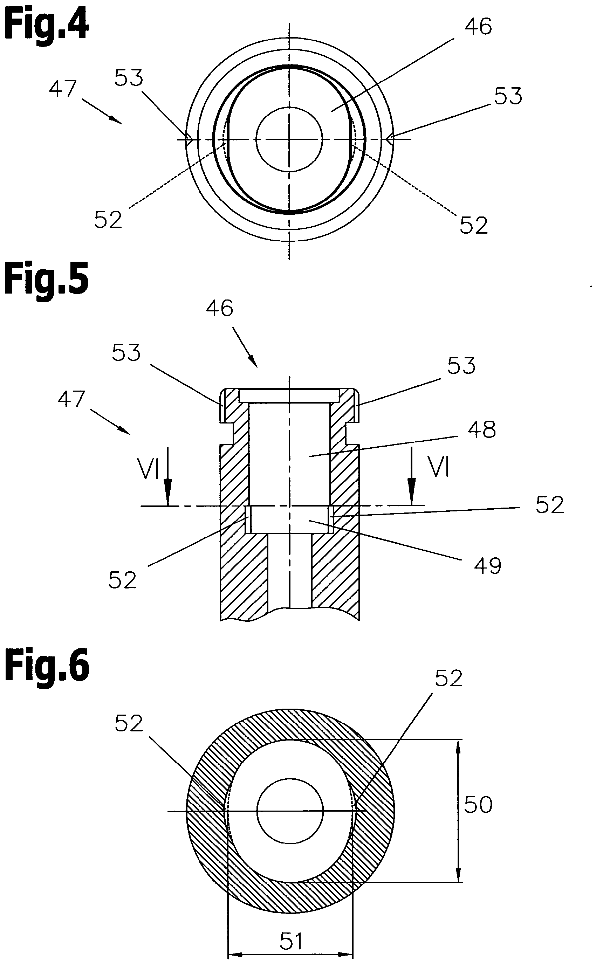

Bevorzugt kann die zusammengedrückte Stellung bzw. die fixierte Drahtseele 26 durch zumindest zwei gegenüberliegende Kerben 53 in der Stirnseite des Anschlags 33 und im Stromdorn 47 gekennzeichnet werden. Fluchten die Kerben 53 des Anschlags 33 und des Stromdorns 47, ist die Drahtseele 26 fixiert. Die fluchtenden Kerben 53 dienen zur Markierung einer ordnungsgemäßen Fixierung für den Benutzer. Die Kerben 53 befinden sich also an der Stirnseite entlang der Hauptachse 38 des ovalen Stegs 35 der Drahteinlaufdüse 27 und an der Nebenachse 51 des zweiten Teilabschnitts 49 der Ausnehmung 46 des Stromdorns 47 (siehe Fig. 3 und 4). Die Kerben 53 an der Drahteinlaufdüse 27 sind also normal zum Schlitz 36 und die Kerben 53 am Stromdorn 47 in der Flucht des Schlitzes 36 angeordnet, solange die Drahteinlaufdüse 27 nicht verdreht wurde.

Dadurch, dass der zweite Teilabschnitt 49 der Ausnehmung 46 des Stromdorns 47 nahezu rund ausgebildet ist, kann die Drahtseele 26 durch Verdrehung in beliebiger Richtung fixiert werden. Grundsätzlich wird die Drahtseele 26 durch eine Viertel-Drehung der Drahteinlaufdüse 27 fixiert bzw. gelöst.

Das Befestigungsmittel 31 kann in der Öffnung zur Aufnahme der Drahtseele 26 auch Rillen, ein Gewinde oder Ähnliches aufweisen, durch welche die Klemmung der Drahtseele 26 verbessert werden kann. Bevorzugt wird eine solche Modifikation bei weicheren Materialien der Drahtseele 26 vorgenommen werden.

## Patentansprüche

1. Drahteinlaufdüse (27) zur Befestigung in einer Kupplung (29) eines Schlauchpakets (21), umfassend ein Drahteinlaufelement (32), **gekennzeichnet durch** ein zylinderförmig ausgebildetes und zumindest einen Schlitz (36) zur Bildung zumindest zweier beweglicher Backen (37) aufweisendes Befestigungsmittel (31), wobei das Befestigungsmittel (31) eine Öffnung (28) zur lösbaren Aufnahme einer Drahtseele (26) aufweist, und zur gleichzeitigen Fixierung der Drahtseele (26) und in der Kupplung (29) durch eine manuelle Drehbewegung verformbar ausgebildet ist, wobei das Befestigungsmittel (31) an dem dem Drahteinlaufelement (32) gegenüberliegenden Ende mit einem ovalen Steg (35) versehen ist, welcher ovale Steg (35) gegenüber dem zylinderförmigen Bereich erhöht ausgebildet ist.

2. Drahteinlaufdüse (27) nach Anspruch 1, **dadurch gekennzeichnet, dass** im Befestigungselement (31) im Bereich des zumindest einen Schlitzes (36) ein Pressbereich (44) und ein Federbereich (45) zur Fixierung der Drahtseele (26) durch Zusammendrücken der neben dem zumindest einen Schlitz (36) gebildeten Backen (37) ausgebildet ist.

3. Drahteinlaufdüse (27) nach Anspruch 1 oder 2, **dadurch gekennzeichnet, dass** ein Bereich zwischen Drahteinlaufelement (32) und Befestigungsmittel (31) gerippt oder geriffelt ausgeführt ist zur Erleichterung einer werkzeuglosen, manuellen Drehbewegung zur Fixierung.

4. Drahteinlaufdüse (27) nach Anspruch 3, **dadurch gekennzeichnet, dass** im Bereich des Elements zur Ausführung der Drehbewegung zumindest eine Kerbe (53) zur Markierung der Fixierung angeordnet ist.

5. System zur Befestigung einer Drahtseele (26) für einen Schweißdraht (9) in einer Kupplung (29) eines Schlauchpakets (21), wobei das System eine Kupplung (29), eine in der Kupplung (29) befindlichen Drahtseele (26) und eine Drahteinlaufdüse (27) umfasst, wobei die Drahtseele (26) mit der Drahteinlaufdüse (27) in der Kupplung (29) fixiert ist, **dadurch gekennzeichnet, dass** die Drahteinlaufdüse (27) nach einem der Ansprüche 1 bis 4 ausgebildet ist.

6. Befestigungssystem nach Anspruch 5, **dadurch gekennzeichnet, dass** die Kupplung (29) entlang eines ersten Teilabschnitts (48) eine ovale Ausnehmung (46) und am Ende einen nahezu rund ausgebildeten zweiten Teilabschnitt (49) aufweist.

## Claims

1. Wire inlet nozzle (27) for being fastened in a coupling (29) of a hose assembly (21), comprising a wire inlet element (32), **characterised by** a cylindrical fastening means (31) which comprises at least one slot (36) for forming at least two movable jaws (37), the fastening means (31) comprising an opening (28) for removably receiving a wire core (26), and being designed to simultaneously fix the wire core (26) in place and to be deformable in the coupling (29) by a manual rotational movement, the fastening means (31) being provided with an oval projection (35) on the end opposite the wire inlet element (32), which oval projection (35) is raised relative to the cylindrical region.

2. Wire inlet nozzle (27) according to claim 1, **characterised in that** a press region (44) and a spring region (45) are formed in the fastening element (31) in the region of the at least one slot (36) so as to fix the wire core (26) in place by pressing together the jaws (37) formed next to the at least one slot (36).

3. Wire inlet nozzle (27) according to either claim 1 or claim 2, **characterised in that** a region between the wire inlet element (32) and fastening means (31) is ribbed or fluted so as to facilitate a tool-free, manual rotational movement for the fixation.

4. Wire inlet nozzle (27) according to claim 3, **characterised in that** at least one notch (53) for marking the fixation is arranged in the region of the element for performing the rotational movement.

5. System for fastening a wire core (26) for a welding wire (9) in a coupling (29) of a hose assembly (21), the system comprising a coupling (29), a wire core (26) located in the coupling (29), and a wire inlet nozzle (27), the wire core (26) being fixed together with the wire inlet nozzle (27) in the coupling (29), **characterised in that** the wire inlet nozzle (27) is designed according to any of claims 1 to 4.

6. Fastening system according to claim 5, **characterised in that** the coupling (29) has an oval recess (46) along a first portion (48) and an approximately round second portion (49) at the end.

## Revendications

1. Buse d'arrivée de fil (27) destinée à être fixée dans un couplage (29) d'un ensemble de tuyaux (21), comprenant un élément d'arrivée de fil (32), **caractérisée par** au moins une fente (36) de forme cylindrique pour la formation d'un moyen de fixation (31) comprenant au moins deux mâchoires mobiles (37), le moyen de fixation (31) comprenant une ouverture (28) pour le logement amovible d'une âme de fil (26) et pour la fixation simultanée de l'âme de fil (26) et étant réalisé de manière déformable dans le couplage (29) par un mouvement de rotation manuel, le moyen de fixation (31) étant muni, au niveau de l'extrémité opposée à l'élément d'arrivée de fil (32), d'une nervure ovale (35), cette nervure ovale (35) étant rehaussée par rapport à la partie cylindrique.

2. Buse d'arrivée de fil (27) selon la revendication 1, **caractérisée en ce que**, dans l'élément de fixation (31), au niveau de l'au moins une fente (36), est réalisée une zone de pressage (44) et une zone de ressort (45) pour la fixation de l'âme du fil (26) par compression des mâchoires (37) formées à proximité de l'au moins une fente (36).

3. Buse d'arrivée de fil (27) selon la revendication 1 ou 2, **caractérisée en ce qu'**une zone entre l'élément d'arrivée de fil (32) et le moyen de fixation (31) est nervurée ou rainurée afin de faciliter un mouvement de rotation manuel sans outil pour la fixation.

4. Buse d'arrivée de fil (27) selon la revendication 3, **caractérisée en ce que**, au niveau de l'élément pour l'exécution du mouvement de rotation, est disposée au moins une encoche (53) pour le marquage de la fixation.

5. Système pour la fixation d'une âme de fil (26) pour un fil de soudure (9) dans un couplage (29) d'un ensemble de tuyaux (21), le système comprenant un couplage (29), une âme de fil (26) se trouvant dans le couplage (29) et une buse d'arrivée de fil (27), l'âme de fil (26) étant fixée dans le couplage (29) avec la buse d'arrivée de fil (27), **caractérisée en ce que** la buse d'arrivée de fil (27) est conçue selon l'une des revendications 1 à 4.

6. Système de fixation selon la revendication 5, **caractérisé en ce que** le couplage (29) comprend, le long d'une première partie (48), un évidement ovale (46) et, à l'extrémité, une deuxième partie (49) de forme presque ronde.
